(19) **Europäisches Patentamt**

**European Patent Office**

**Office européen des brevets**

(11) **EP 1 499 032 A1**

(12) **EUROPEAN PATENT APPLICATION**
published in accordance with Art. 158(3) EPC

(43) Date of publication:
**19.01.2005 Bulletin 2005/03**

(51) Int Cl.⁷: **H04B 1/707**

(21) Application number: **03719148.3**

(86) International application number:
**PCT/JP2003/005029**

(22) Date of filing: **21.04.2003**

(87) International publication number:
**WO 2003/090372 (30.10.2003 Gazette 2003/44)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.04.2002 JP 2002117081**

(71) Applicant: **MATSUSHITA ELECTRIC INDUSTRIAL CO., LTD.**
**Kadoma-shi, Osaka 571-8501 (JP)**

(72) Inventors:
• **SETO, Yoshitaka**
  **Yokohama-shi, Kanagawa 224-0054 (JP)**
• **NISHIO, Akihiko**
  **Yokosuka-shi, Kanagawa 239-0846 (JP)**

(74) Representative: **Grünecker, Kinkeldey, Stockmair & Schwanhäusser Anwaltssozietät**
**Maximilianstrasse 58**
**80538 München (DE)**

(54) **SIR MEASUREMENT DEVICE AND METHOD**

(57)  An SIR measuring apparatus capable of measuring an SIR after interference cancellation with a high degree of accuracy in a short time after its reception without performing JD demodulation. This apparatus creates a delay profile using midamble sections and measures the SIR using this delay profile and estimated path positions. That is, the signal power measuring section (142) measures signal power from the delay profile and the positions of the selected paths and the interference power measuring section (144) measures interference power from the delay profile and the positions of the selected paths. Then, the signal power correction section (146) and interference power correction section (148) perform necessary corrections and the SIR calculation section (150) calculates the SIR according to predetermined calculation formulas.

CODE INFORMATION

140

•DELAY PROFILE
•POSITION OF SELECTED PATH

142 SIGNAL POWER MEASURING SECTION

146 SIGNAL POWER CORRECTION SECTION

SIGNAL POWER

•SPREADING FACTOR
•ALLOCATION MODE
•RECEPTION POWER AFTER RAKE COMBINING

150 SIR CALCULATION SECTION

SIR OUTPUT

144 INTERFERENCE POWER MEASURING SECTION

148 INTERFERENCE POWER CORRECTION SECTION

AUTOCORRELATION VALUE

FIG.2

**Description**

Technical Field

The present invention relates to an apparatus and method for SIR measurement.

Background Art

Realizing high accuracy transmit power control (TCP) requires SIR (Signal to Interference Ratio: ratio of signal power to interference power) to be measured with a high degree of accuracy.

For example, a TD-SCDMA (Time Division-Synchronous Code Division Multiple Access) system measures an SIR after interference cancellation (e.g., JD demodulation) of downlink time slots with a high degree of accuracy and calculates a transmit power control (TPC) bit using the result. Joint Detection (JD) is one of interference cancellation technologies and is a reception scheme which performs high accuracy interference cancellation through calculations using a matrix (systemmatrix) obtained from delay profiles and spreading codes.

In this case, a conventional SIR measuring method measures an SIR from data sections after JD demodulation.

However, in a conventional SIR measuring method, because an SIR after JD demodulation is measured, the calculation of a TPC bit using this result may be too late for transmission of the next uplink time slot. That is, since JD demodulation requires a large amount of calculation and takes much time, calculating the transmit power control bit in time for the next uplink time slot requires that the SIR measurement processing or JD demodulation processing should be carried out at high speed. However, speeding up the SIR measurement processing or JD demodulation processing has a certain limit. In the case where the calculation of the TPC bit is too late for transmission of the next uplink time slot, it is not possible to keep up with variations in the propagation environment at high speed, resulting in a certain limit to improvement in the accuracy of transmit power control.

Therefore, a TD-SCDMA system is strongly required to measure the SIR of downlink time slots after interference cancellation with a high degree of accuracy and calculate the TPC bit using the result in time for the next uplink time slot.

Disclosure of Invention

It is an object of the present invention to provide an apparatus and method for measuring an SIR after interference cancellation in a short time after reception of the SIR with a high degree of accuracy without the need to perform JD demodulation.

An essence of the present invention is to create a delay profile using a midamble section, measure an SIR using this delay profile and estimated path position and thereby determine the SIR af ter interference cancellation without performing JD demodulation. This allows a transmit power control (TPC) bit to be calculated immediately after reception of a downlink slot and allows the TPC bit to be calculated in time for transmission of the next uplink time slot.

An SIR measuring apparatus according to an embodiment of the present invention comprises a creation section which creates a delay profile using known signals included in a received signal, a selection section which selects real paths using the created delay profile, a RAKE combining section which RAKE-combines the received signal and a measuring section which measures an SIR after interference cancellation using the created delay profile, the positions of the selected paths and the reception power after the RAKE combining.

An SIR measuring method according to another embodiment of the present invention comprises a creating step of creating a delay profile using known signals included in a received signal, a selecting step of selecting real paths using the created delay profile, a RAKE combining step of RAKE combining the received signal and ameasuring step of measuring an SIR after interference cancellation using reception power after the RAKE combining.

Brief Description of Drawings

FIG. 1 is a block diagram showing a configuration of an SIR measuring apparatus according to Embodiment 1 of the present invention;
FIG.2 is a block diagram showing a configuration example of the SIR measuring section in FIG. 1;
FIG.3 illustrates an example of a common midamble time slot;
FIG.4 illustrates an example of a default midamble time slot;
FIG.5 illustrates an example of a UE specific midamble time slot;

FIG.6 illustrates an example of a delay profile of a common midamble;

FIG.7 illustrates an example of simulation conditions;

FIG. 8 illustrates an example of a basic SIR measuring characteristic which is the result of an SIR measuring simulation;

FIG.9 illustrates interference among paths;

FIG.10 illustrates an example of an SIR measuring characteristic after correction which is the result of an SIR measuring simulation;

FIG. 11 illustrates influences of a roll off filter;

FIG.12 illustrates an impulse response waveform of a filter;

FIG. 13 illustrates a ratio of power in the same path to total power (power ratio within the same path range) with respect to the number of chips in a range assumed to be the same path;

FIG.14 illustrates an example of an SIR measuring characteristic after a roll off filter is corrected, which is the result of an SIR measuring simulation;

FIG. 15 illustrates an example of an SIR measuring characteristic (dynamic characteristic case 1) due to a difference in the propagation path characteristic which is the result of an SIR measuring simulation;

FIG.16 illustrates an example of an SIR measuring characteristic (dynamic characteristic case 2) due to a difference in the propagation path characteristic which is the result of an SIR measuring simulation;

FIG.17 illustrates an example of an SIR measuring characteristic (dynamic characteristic case 3) due to a difference in the propagation path characteristic which is the result of an SIR measuring simulation;

FIG.18 illustrates a propagation path characteristic of cases 1 to 3 in FIG. 15 to FIG.17;

FIG.19 illustrates an example of a delay profile of a common midamble when the interference power measuring range is expanded;

FIG.20 illustrates an example of an SIR measuring characteristic depending on the difference in the delay profile length, which is the result of an SIR measuring simulation;

FIG.21 illustrates an example of a delay profile of a default (UE specific ) midamble when the interference power measuring range is expanded;

FIG.22 illustrates an example of a more specific delay profile according to a method of calculating an SIR for each midamble and averaging the SIR;

FIG.23 illustrates an example of a more specific delay profile according to a method of calculating signal power and interference power for each midamble and averaging them; and

FIG.24 is a block diagram showing a configuration of an SIR measuring section of an SIR measuring apparatus according to Embodiment 2 of the present invention.

Best Mode for Carrying out the Invention

With reference now to the attached drawings, embodiments of the present invention will be explained in detail below. Here, a case where the present invention is applied to a TD-SCDMA system will be explained as an example.

(Embodiment 1)

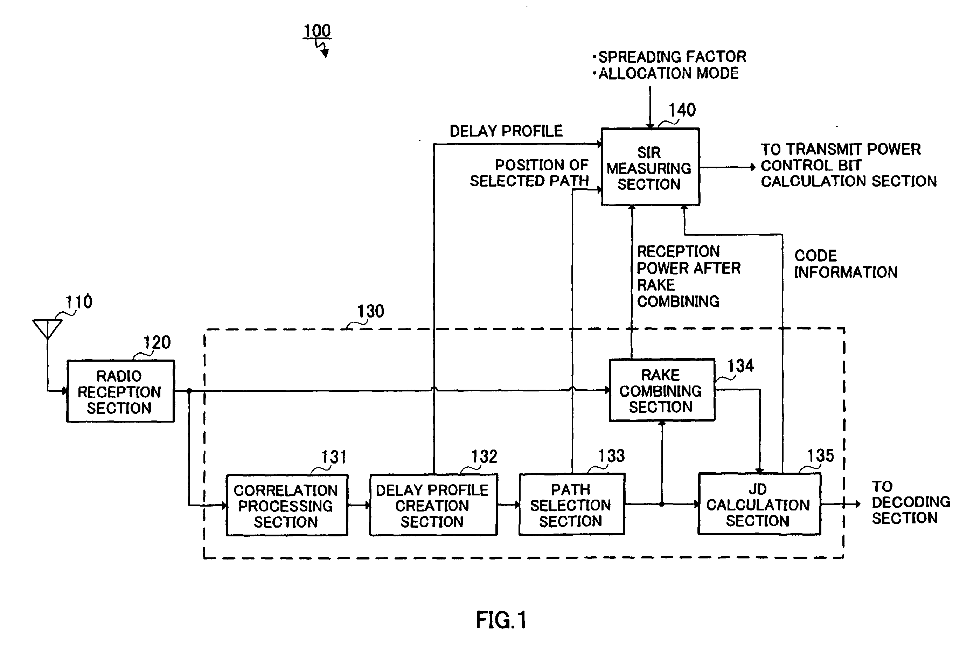

FIG. 1 is a block diagram showing a configuration of an SIR measuring apparatus according to Embodiment 1 of the present invention.

An SIR measuring apparatus 100 shown in FIG. 1 roughly comprises an antenna 110, a radio reception section 120, a JD demodulation section 130 and an SIR measuring section 140. The JD demodulation section 130 comprises a correlation processing section 131, a delay profile creation section 132, a path selection section 133, a RAKE combining section 134 and a JD calculation section 135.

A radio signal received by the antenna 110 is subjected to predetermined reception processing such as down-conversion by the radio reception section 120 and converted to a baseband signal. The radio reception section 120 is provided with a reception filter (not shown) (e.g., roll off filter). The baseband signal obtained by the radio reception section 120 is input to the JD demodulation section 130.

The JD demodulation section 130 performs JD demodulation on the received signal. More specifically, the correlation processing section 131 performs correlation processing using known signals (here, midamble sections of downlink time slot) included in the received signal, the delay profile creation section 132 creates a delay profile using this correlation processing result, the path selection section 133 performs predetermined threshold processing using this delay profile to select (estimate) real paths. This path selection result is input to the RAKE combining section 134 and JD calculation section 135. The RAKE combining section 134 RAKE-combines the received signal using the path selection result. The JD calculation section 135 performs a JD calculation using the RAKE combining result and path selection result to obtain a demodulated signal with interference cancelled. The demodulated signal after the interference cancellation obtained at the JD calculation section 135 is sent to a decoding section (not shown).

The SIR measuring section 140 measures an SIR after interference cancellation using the delay profile, the positions of the selected paths and reception power after the RAKE combining obtained from the JD demodulation section 130 without waiting until the JD demodulation processing is completed. The SIR measuring section 140 is fed the delay profile from the delay profile creation section 132, the positions of the selected paths from the path selection section 133 and the reception power after the RAKE combining from the RAKE combining section 134. On the other hand, the SIR measuring section 140 is also fed, in addition to spreading factor and allocation mode, code information from the JD calculation section 135. The code information is obtained in the middle of a JD calculation. The measurement result of the SIR measuring section 140 is sent to a transmit power control (TPC) bit calculation section (not shown).

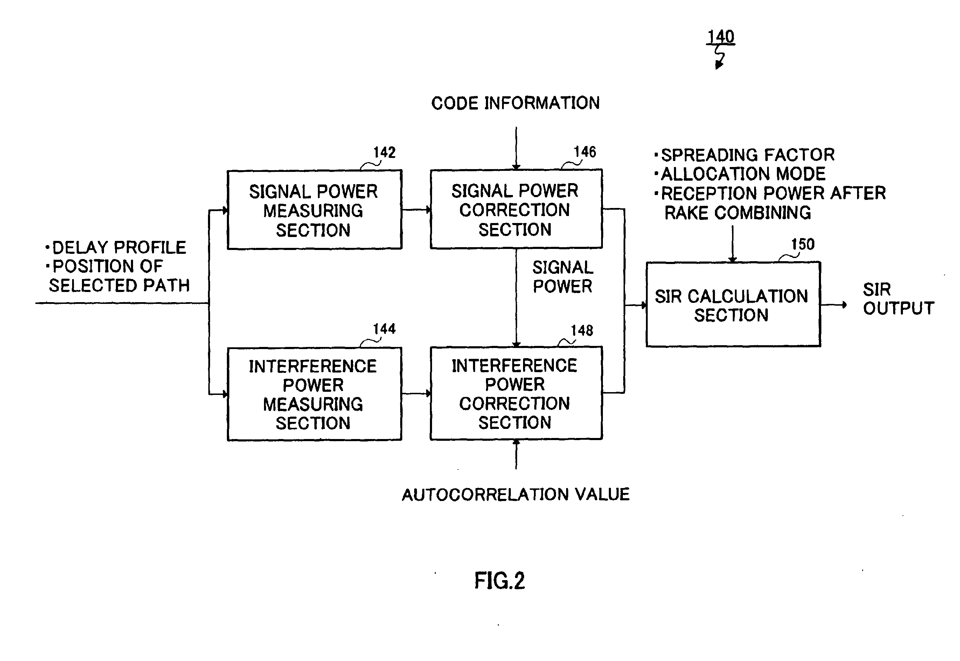

FIG.2 is a block diagram showing a configuration example of the SIR measuring section 140.

As shown in FIG.2, the SIR measuring section 140 comprises a signal power measuring section 142, an interference power measuring section 144, a signal power correction section 146, an interference power correction section 148 and an SIR calculation section 150. The signal power measuring section 142 measures signal power using the delay profile and the positions of the selected paths and the interference power measuring section 144 measures interference power using the delay profile and the positions of the selected paths. The signal power correction section 146 and interference power correction section 148 perform corrections to improve the accuracy of measurement. Therefore, code information is input to the signal power correction section 146 and an autocorrelation value is input to the interference power correction section 148. The SIR calculation section 150 calculates the ratio of signal power to interference power and converts it to the SIR of the data section. More specifically, the SIR calculation section calculates the SIR according to a predetermined calculation formula using, for example, signal power, interference power, reception power after RAKE combining, allocation mode and spreading factor.

Then, the SIR measuring method implemented by the SIR measuring section 140 in the above described configuration will be explained in detail.

First, a midamble allocation mode (hereinafter simply referred to as "allocationmode") used in a TD-SCDMA system will be explained. The SIR measuring method (calculation formula) varies from one allocation mode to another as will be described in detail later.

There are three kinds of allocation modes in the TD-SCDMA system; common midamble, default midamble, UE specific midamble.

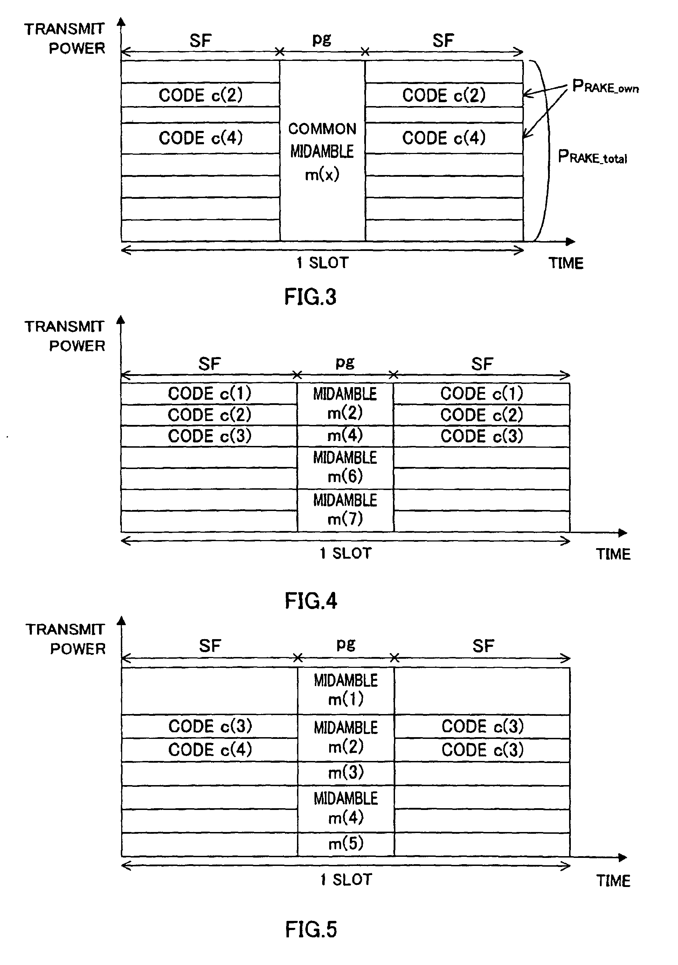

FIG.3 illustrates an example of a time slot of a common midamble. In the case of a common midamble, as shown in FIG.3, there is only one midamble in one time slot and one or a plurality of user data are multiplexed using one or a plurality of codes in the data section. At this time, the power of the multiplexed data section is equal to the power of the midamble section.

FIG.4 illustrates an example of a time slot of a default midamble. In the case of a default midamble, as shown in FIG.4, there is a plurality of midambles in one time slot and a plurality of users uses the plurality of midambles. Furthermore, data is multiplexed using one or a plurality of codes for each midamble and the power of the data section is equal to the power of the midamble.

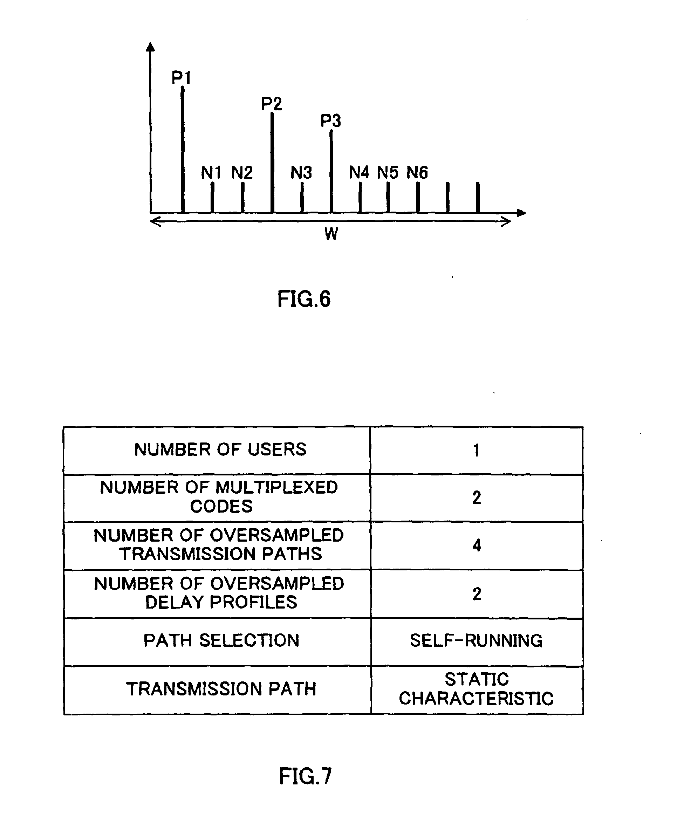

FIG.5 illustrates an example of a time slot of a UE specific midamble. In the case of the UE specific midamble, as shown in FIG.5, there is a plurality of midambles in one time slot and a plurality of users uses one midamble. Furthermore, data is multiplexed using one or a plurality of codes for each midamble and the power of the data section is equal to the power of the midamble section.

An SIR measuring method using a midamble section in each allocation mode will be explained more specifically below. Here, a case of a common midamble whose time slot structure is relatively simple will be explained first and then other allocation modes will be explained one by one.

Here, conditions to be assumed are as follows:

1) When a midamble correlation is calculated, interference components are suppressed to 1/pg on average. pg is the length of the midamble (number of chips of the midamble section) whose correlation is calculated and is 128 in the case of TD-SCDMA.

2) An interference component appears at positions other than the position of a midamble correlation path.

3) Interference in the own cell can be cancelled completely by JD. Considering the insufficiency of JD interference cancellation, an interference cancellation rate (e.g., 0.8) may be introduced.

In this embodiment, an SIR is measured using the midamble section, but the present invention is not limited to this. Instead of the midamble section, other pilot signals (known signals) can also be used.

SIR measurement using common midamble

First, a basic SIR calculation method will be explained.

FIG.6 illustrates an example of a delay profile. This delayprofile is createdby the delayprofile creation section 132 using a midamble section. In FIG.6, P1, P2 and P3 can be regarded as signal components and N1 to N6 can be regarded as interference components.

Here, suppose Np is the number of paths, W is the length of a delay profile, DP(i) is power of the ith chip of the delay profile, DP(j) is power of the jth chip of the delay profile and P is a set of real paths. Then, the SIR of the midamble section is calculated by the following formula (1):

$$SIR = \frac{\sum\limits_{\substack{i \in P}}^{N_p} DP(i)}{\sum\limits_{\substack{j \in \bar{P}}}^{W-N_P} DP(j) \Big/ (W - N_P)} \qquad \cdots (1)$$

In the example in FIG.6, the signal power as the numerator of formula (1) is the sum of P1, P2 and P3, which are the positions of real paths and the interference power as the denominator is an average of N1 to N6 which are not the positions of real paths. Furthermore, $N_p$=3, W=9. The interference power is averaged because it is not in phase with each other.

Then, in order to convert the SIR measured at the midamble section to an SIR of the data section, it is necessary to convert the signal power of the midamble section to signal power per 1 code, 1 symbol. The time slot of a common midamble is, for example, as shown in FIG.3 above.

First, the signal power of the midamble section is converted to signal power per 1 code of the data section. As shown above, the data section is multiplexed with a plurality of spreading codes and the sum total of power of the multiplexed signals is equal to the power of the midamble section. Therefore, it is possible to calculate reception code power of the own user from the power of the midamble section using the ratio of the result of the RAKE combining of codes used which was created at the time of code decision at the JD calculation section 135. That is, the signal power of the midamble section is multiplied by a factor of $P_{RAKE\_own}/P_{RAKE\_total}$. Here, $P_{RAKE\_own}$ is power after RAKE combining using the spreading code of the own user, $P_{RAKE\_total}$ is total power corresponding to all spreading codes of power after RAKE combining of the respective spreading codes. In the case where the own user uses a plurality of spreading codes, suppose the average of reception code power of all codes used by the own user is $P_{RAKE\_own}$.

Then, the power is converted to signal power per 1 symbol. The midamble section has a processing gain of pg, whereas the data section has only a processing gain of spreading factor SF. Therefore, the result is multiplied by a factor of SF/pg.

Thus, the SIR of the data section is expressed by the following formula (2):

$$SIR = \frac{\sum\limits_{\substack{i \in P}}^{N_p} DP(i)}{\sum\limits_{\substack{j \in \bar{P}}}^{W-N_P} DP(j) \Big/ (W - N_P)} \times \frac{P_{RAKE\_own}}{P_{RAKE\_total}} \times \frac{SF}{pg} \qquad \cdots (2)$$

This is the basic formula for SIR measurement.

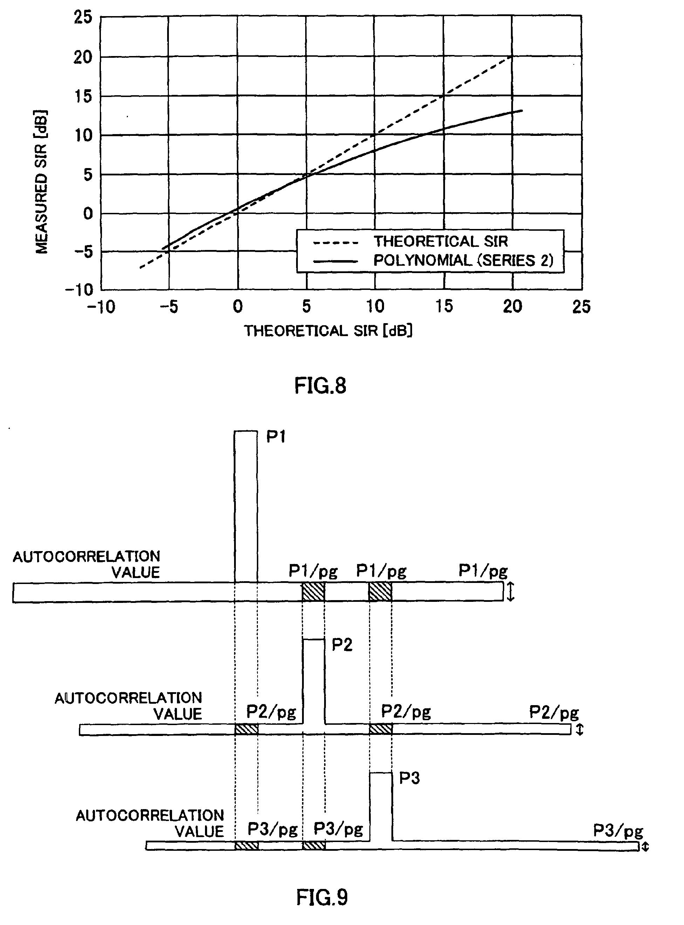

Here, when an SIRmeasuring simulation was conducted under the simulation condition shown in FIG.7 using formula (2), the simulation result (basic SIR measuring characteristic) shown in FIG.8 was obtained.

Then, various corrections are made to improve the accuracy of measurement. Corrections include correction of signal power (removal of influences of interference among selected paths), correction of interference power (removal of influences of autocorrelation component), correction of interference power (removal of influences of a roll off filter), expansion of interference power measuring range (improvement for propagation path with dynamic characteristic). These will be explained one by one below.

First, correction of signal power (removal of influences of interference among selected paths) will be explained using FIG.9. FIG.9 illustrates interference among paths.

As shown in FIG.9, the measured signal power of each path also includes interference components from other paths. For example, the power is:

Interference component from path 2 included in path 1: P2 $\times$ 1/pg
Interference component from path 3 included in path 1: P3 $\times$ 1/pg

Since the phases of these interference components are random, the sum of the interference components from other paths needs only to be calculated at levels of these power values. Therefore, the real power of path 1 is:

$$P1-(P2\times 1/pg+P3\times 1/pg)$$

Likewise, the real power of path 2 and the real power of path 3 are:

$$P2-(P3\times 1/pg+P1\times 1/pg)$$

$$P3-(P1\times 1/pg+P2\times 1/pg)$$

Therefore, signal power after corrections is:

$$P1+P2+P3-(P1+P2+P3)\times 1/pg\times (Np-1)$$

$$= (P2+P2+P3)\times (1-(Np-1)/pg)$$

From this, the general formula of the SIR after the correction of signal power is expressed in the following formula (3):

$$SIR = \frac{\displaystyle\sum_{i\in P}^{Np} DP(i)\cdot\left(1-\frac{N_P-1}{pg}\right)}{W-N_P} \Bigg/ \sum_{j\in P} DP(j)\Big/(W-N_P) \times \frac{P_{RAKE\_own}}{P_{RAKE\_total}}\times\frac{SF}{pg} \quad \cdots(3)$$

Thus, correcting signal power in such a way that influences of interference among the selected paths are removed can improve the accuracy of measurement of signal power and improve the accuracy of measurement of SIR.

Then, corrections of interference power (removal of influences of autocorrelation component) will be explained.

As shown in FIG.9, the measured interference power includes power generated by an autocorrelation. Therefore, calculating interference power after interference cancellation within the own cell requires signal power components (preferably signal power components after correction) to be subtracted from the measured interference power. For example, the signal power components are:

Component of path 1 included in interference signal power:

$$P1\times 1/pg$$

Component of path 2 included in interference signal power:

$$P2 \times 1/pg$$

Component of path 3 included in interference signal power:

$$P3 \times 1/pg$$

Therefore, the real interference signal power is:

(Average of N1 to N6)-(P1+P2+P3)$\times$1/pg

Further considering the above described signal power, (P1+P2+P3) is replaced by (P1+P2+P3) $\times$ (1-(Np-1)/pg) and then (Average of N1 to N6) - (P1+P2+P3) $\times$ (1- (Np-1) /pg) is obtained.

Then, in addition to the correction of signal power, the general formula of the SIR after the correction of interference power (removal of influences of autocorrelation components) is expressed by the following formula (4):

$$SIR = \frac{\sum_{i \in P}^{N_P} DP(i) \cdot \left(1 - \frac{N_P - 1}{pg}\right)}{\overline{W - N_P}\sum_{j \in P}^{N_P} DP(j) \Big/ (W - N_P) - \sum_{i \in P}^{N_P} DP(i) \cdot \left(1 - \frac{N_P - 1}{pg}\right) \cdot \frac{1}{pg}} \times \frac{P_{RAKE\_own}}{P_{RAKE\_total}} \times \frac{SF}{pg} \quad \cdots (4)$$

Thus, correcting interference power in such a way that influences of the autocorrelation components are removed can improve the accuracy of measurement of interference power and further improve the accuracy of measurement of SIR.

The influences of signal power components on the interference signal power actually tend to depend on not 1/pg but midambles, and therefore autocorrelation values are calculated from basic midambles.

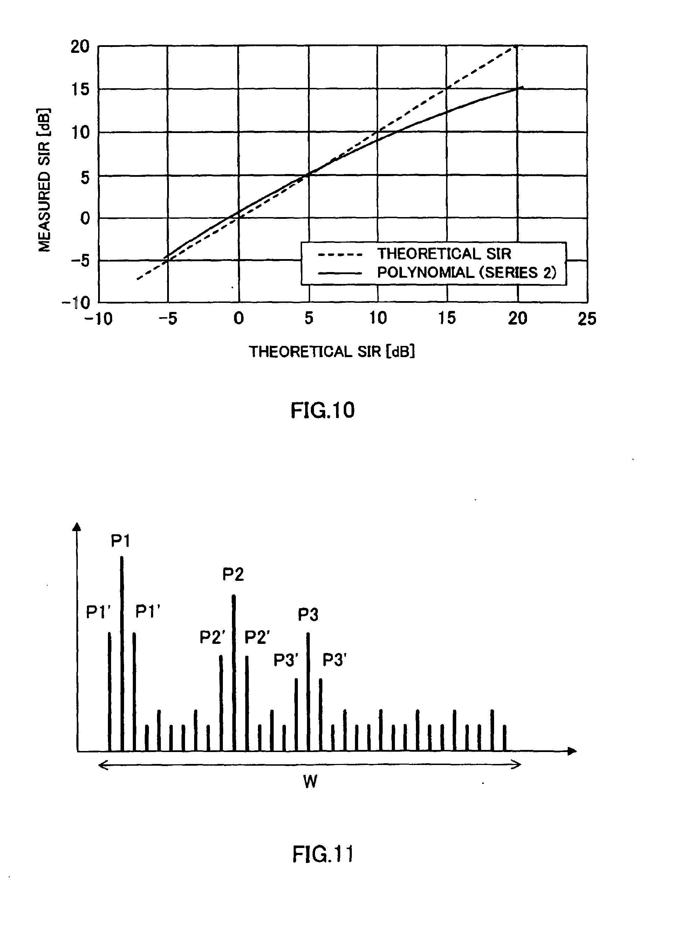

Here, when an SIR measuring simulation was conducted using formula (4) after correction, the simulation result (SIR measuring characteristic after correction) shown in FIG.10 was obtained. As shown in FIG. 10, a deviation is observed in the vicinity of a high SIR. This may be attributable to the fact that signal power is distorted by a roll off filter, having an influence on interference power.

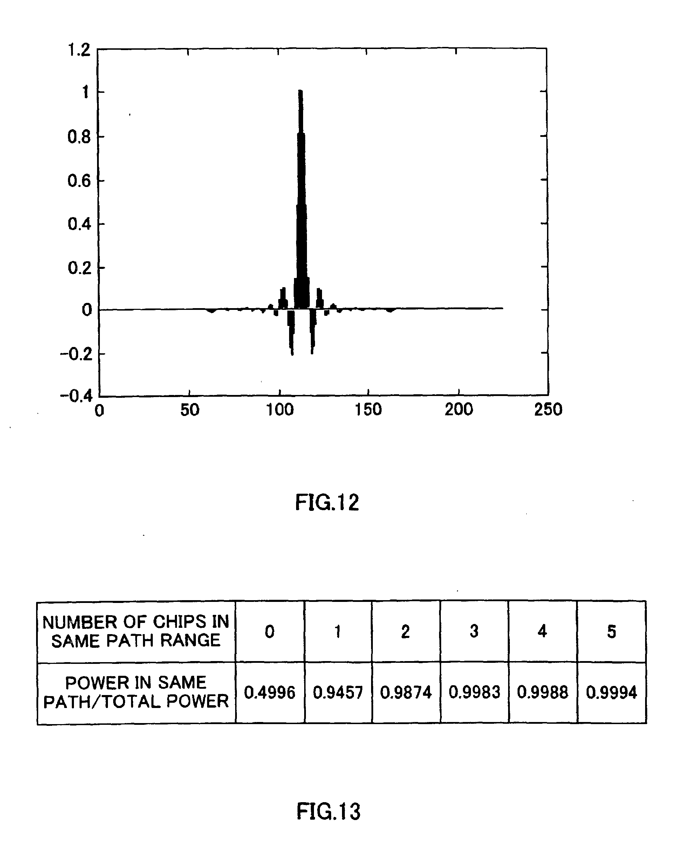

Then, further correction of interference power (removal of influences of the roll off filter) will be explained using FIG. 11. FIG. 11 illustrates influences of the roll off filter.

As shown in FIG. 11, besides peaks (path positions), signal components also appear due to influences of the roll off filter in an oversampled delay profile. These signal components are included in the interference components, and therefore this should be corrected.

Since considerable influences of the roll off filter appear in a range corresponding to several chips near the positions of the selected paths (e.g., P1', P2', P3' in FIG. 11), a method of preventing interference power near the positions of the selected paths from being included in calculations of interference power is adopted as a specific correction method. Here, assuming that Np' is the number of paths in the range assumed to be the same path, the general formula of SIR after correction of interference power (removal of influences of the roll off filter) is expressed by the following formula (5) :

$$SIR = \frac{\sum_{i \in P}^{N_P} DP(i) \cdot \left(1 - \frac{N_P - 1}{pg}\right)}{\overline{W - N_P'}\sum_{j \in P}^{N_P} DP(j) \Big/ (W - N_P') - \sum_{i \in P}^{N_P} DP(i) \cdot \left(1 - \frac{N_P - 1}{pg}\right) \cdot \frac{1}{pg}} \times \frac{P_{RAKE\_own}}{P_{RAKE\_total}} \times \frac{SF}{pg} \quad \cdots (5)$$

Here, in deciding the range assumed to be the same path, the range of impulse responses of the filter was examined. FIG.12 shows waveforms of impulse responses of the filter and FIG.13 shows the ratio of power in the same path to total power (power ratio within the same path range) with respect to the number of chips in the range assumed to be the same path. As shown in FIG. 13, the wider the range assumed to be the same path, the smaller the influences of the filter become. On the other hand, the wider the range assumed to be the same path, the narrower the range in which interference power is measured becomes, and therefore it is necessary to minimize the removal range to remove influences of the filter. For example, in the case of the example of FIG. 13, it is preferable to assume three chips to be the same path range.

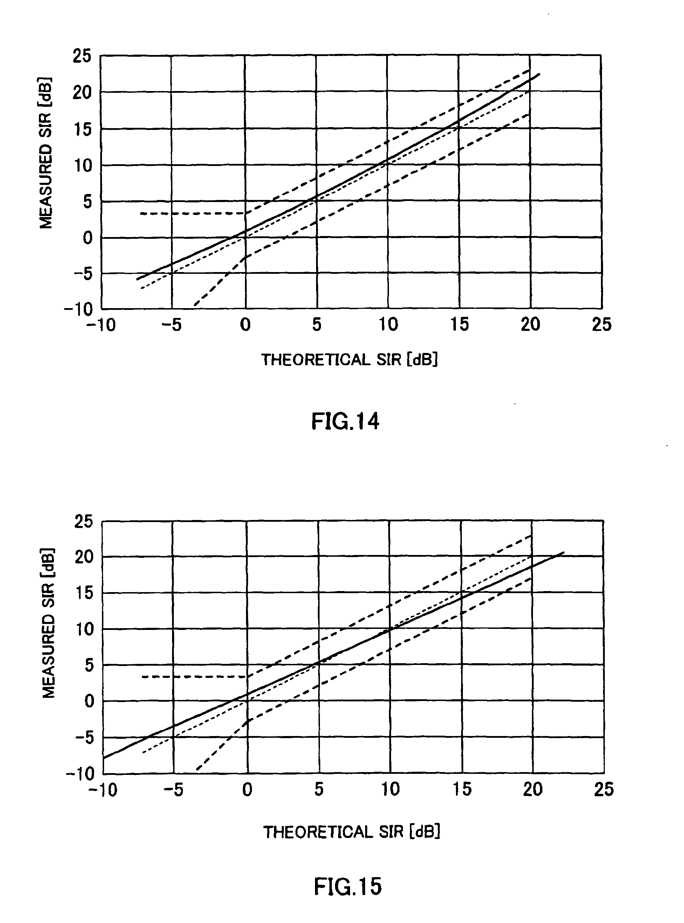

When an SIR measuring simulation was conducted using formula (5) after correction assuming that three chips constitute the same path range, the simulation result (SIR measuring characteristic after correcting the roll off filter) shown in FIG.14 was obtained. It is obvious from this simulation result that the deviation in the vicinity of the high SIR was corrected compared to the previous simulation result (see FIG. 8, FIG.9) and the SIR measuring characteristic as a whole approximated to a theoretical value.

Thus, correcting interference power so as to remove influences of the roll off filter further improves the accuracy of measurement of interference power and can thereby further increase the accuracy of measurement of SIR.

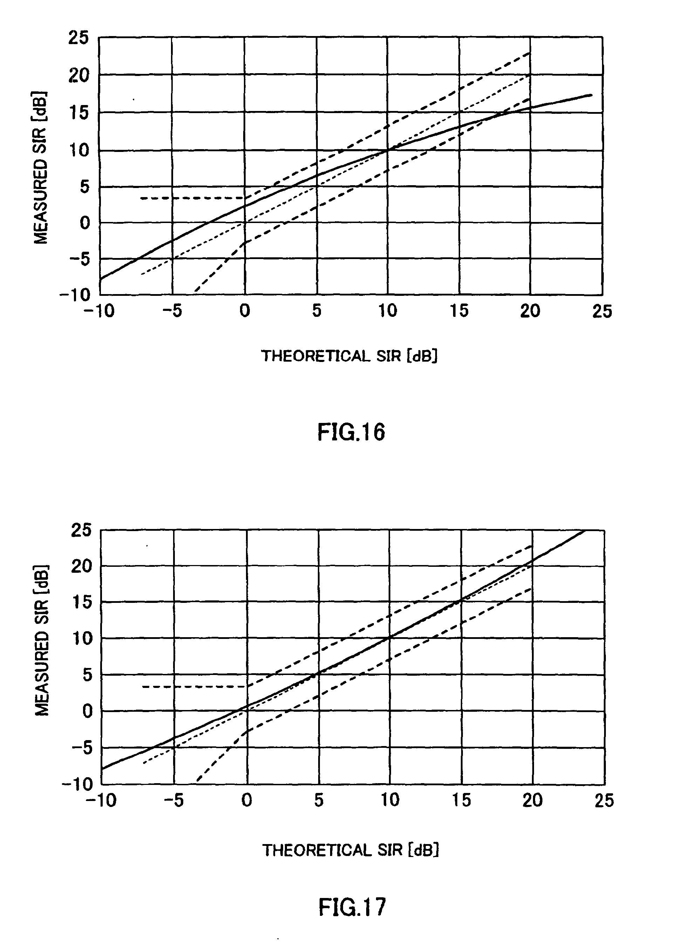

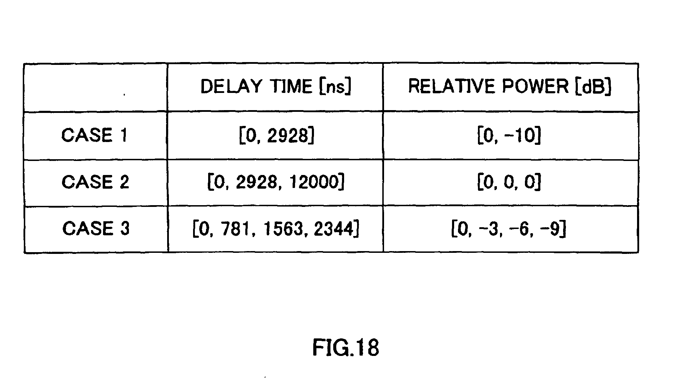

Furthermore, differences in the SIR measuring characteristic depending on the propagation path was examined. FIG. 15, FIG.16 and FIG.17 show the results of SIR measuring simulations using formula (5) when the propagation path has a dynamic characteristic. FIG.15 shows an example of the SIR measuring characteristic (dynamic characteristic case 1) depending on the differenceinthepropagation path characteristic, FIG. 16 shows an example of the SIR measuring characteristic (dynamic characteristic case 2) depending on the difference in the propagation path characteristic and FIG.17 shows an example of the SIR measuring characteristic (dynamic characteristic case 3) depending on the difference in the propagation path characteristic. FIG. 18 shows propagation path characteristics of the respective cases 1 to 3. This shows that there is deterioration of the accuracy of measurement in the case 2 shown in FIG. 16. This may be attributable to the fact that in a multipath state in which spacing between delay signals is widened, the range of measuring interference power (W-Np') is small and so the accuracy of measurement of interference power has deteriorated.

Then, an expansion of the interference power measuring range (improvement to the propagation path with a dynamic characteristic) will be explained.

As described above, since the range of averaging interference power (W-Np') is small in a multipath state in which spacing between delay signals is widened, the accuracy of measurement of interference power is assumed to have deteriorated. Therefore, to increase the range of averaging interference power, a delay profile created by a midamble shift which is not used by the own user is used in addition to the delay profile created by the midamble shift used by the own user.

In the case where the allocation mode is a common midamble, a correlation value of one midamble shift appears in thedelayprofile. Amidamble shift (midamble) in one slot is generated by one basic midamble. For this reason, when a delay profile is created, delay profiles of all midamble shifts can be created at a time.

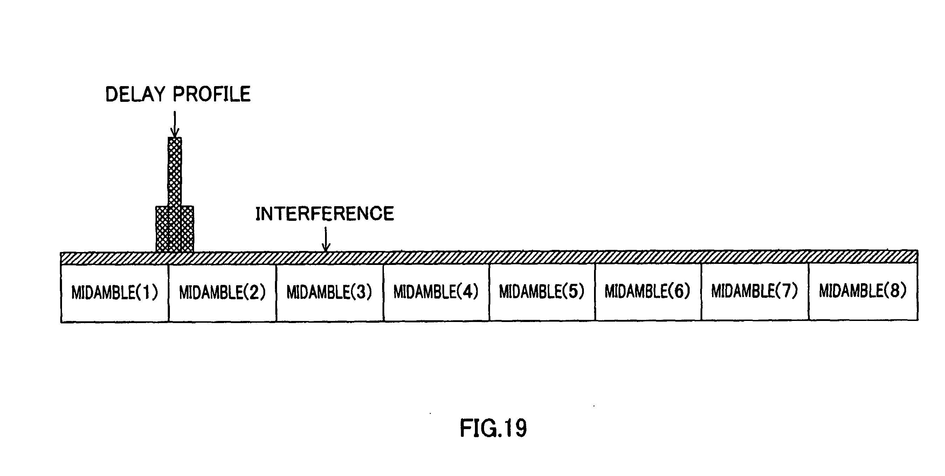

FIG.19 illustrates an example of a delay profile of a common midamble. As shown in FIG.19, when the midamble shift used is midamble (2), a correlation value appears only in the area of midamble (2) of the created delay profile. No signal power appears in unusedmidamble shifts (midamble (1), midamble (3) to midamble (8)), but only interference power appears. Therefore, the range of measuring interference power is expanded by averaging interference power of the delay profile created by other midamble shifts.

This allows the general formula of an SIR after correction (expansion of interference power measuring range) is expressed by the following formula (6):

$$SIR = \frac{\sum_{i \in P}^{N_P} DP(i) \cdot \left(1 - \frac{N_P - 1}{pg}\right)}{\sum_{k \in K_{all}}^{N_{Kall}} \sum_{j \in P}^{W - N_{Pk}'} DP_k(j) \Big/ \sum_{k \in K_{all}}^{N_{Kall}} (W - N_{Pk}') - \sum_{i \in P}^{N_P} DP(i) \cdot \left(1 - \frac{N_P - 1}{pg}\right) \cdot \frac{1}{pg}} \times \frac{P_{RAKE\_own}}{P_{RAKE\_total}} \times \frac{SF}{pg} \quad \cdots (6)$$

where $N_{kall}$ is the number of midamble shifts, $K_{all}$ is a set of midamble shifts, $N_{pk}'$ is the number of paths at midamble k in the range assumed to be the same path, $DP_k(j)$ is electric power of the jth chip of the delay profile of midamble k.

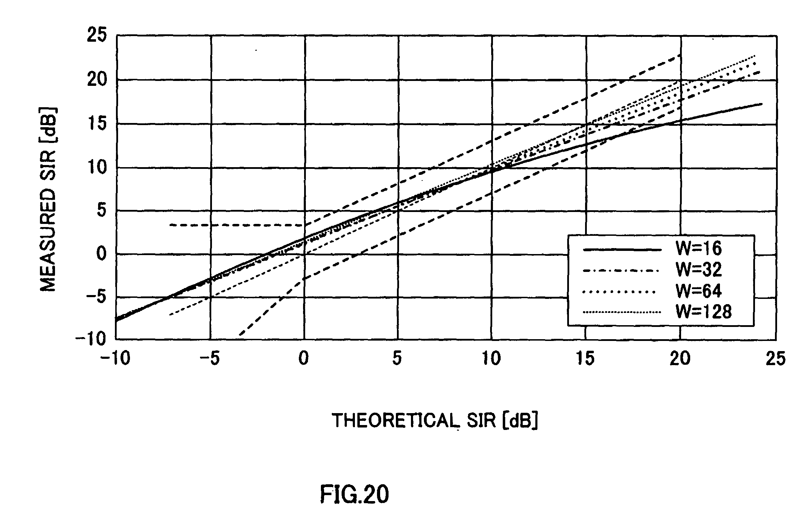

Here, in the case 2 whose propagation path characteristic is a dynamic characteristic, when an SIR measuring simulation was conducted using formula (6) after correction, the simulation result shown in FIG.20 (SIR measuring characteristic depending on the difference in the length of a delay profile) was obtained. It is apparent from FIG.20 that the accuracy of measurement of SIR is improved as the range of measuring interference power is expanded.

Thus, measuring interference power using a delay profile of a midamble shift not used by the own user in addition to a delay profile of a midamble shift used by the own user expands the range of measuring interference power and improves the accuracy of measurement of interference power in the case of a propagation path of a dynamic characteristic, too, and can thereby improve the accuracy of measurement of an SIR.

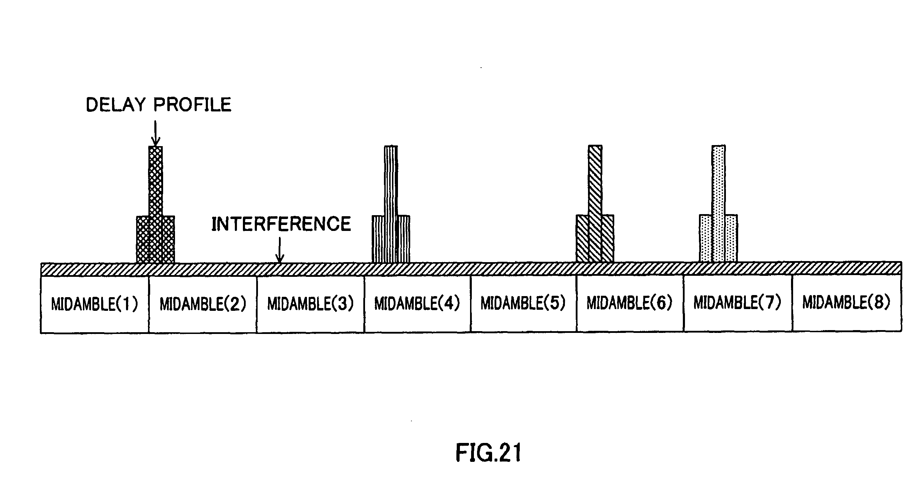

This method is available not only in the case of a common midamble but also in other allocation modes. FIG. 21 illustrates an example of a delay profile of a default (UE specific) midamble. In this case, as shown in FIG.21, a plurality of midambles is used in 1 time slot and interference power appears outside the range of selected paths in a delay profile created in each midamble. Thus, interference power can be measured outside the range of the selected paths of delay profiles created in other midambles. This expands the range of measuring of interference power and improves the accuracy of measurement of interference power (see formula (7) to formula (10) which will be described later).

SIR measurement using default midamble

In the case of a default midamble, one user is likely to use a plurality of midambles (see FIG. 4). In this case, roughly the following two methods are available as the SIR calculation method, that is:

a) Method of calculating SIR for each midamble and averaging the SIR
b) Method of calculating signal power for each midamble, averaging the signal power and regarding the averaging result as S while calculating interference power for each midamble, averaging the interference power and regarding the averaging result as I and calculating the ratio between them (ratio of S to I)

SIR can be calculated in the same way as in the case of a common midamble using paths of all delay profiles including other users. Hereafter, the respective methods will be explained one by one.

a) Method of calculating SIR for each midamble and averaging the SIR

In this method, an SIR is calculated for each midamble in the same way as in the case of a common midamble At this time, other midamble paths (signal components of other users) are also included in the path of the correction item of interference power of the numerator.

Here, suppose $SIR_k$ is the SIR of midamble k, $N_K$ is the total number of multiplexed midamble shifts, K is a set of total multiplexed midamble shifts, $N_{pk}$ is the number of paths of midamble k, $N_{pk}'$ is the number of paths in the range assumed to be the same path in midamble k, $N_{code,k}$ is the number of spreading codes assigned to midamble k, W is the length of a delay profile, $DP_k(i)$ is electric power of the ith chip of a delay profile of midamble k, P is a set of real paths, SF is a spreading factor, pg is the number of chips of a midamble section, $N_{kall}$ is the number of midamble shifts and $K_{all}$ is a set of midamble shifts. Then, an SIR calculated from midamble k is expressed by the following formula (7):

$$SIR_k = \frac{\sum\limits_{i \in P}^{N_{Pk}} DP_k(i) \cdot \left(1 - \frac{N_{Pk}-1}{pg}\right) \Big/ N_{code,k}}{\sum\limits_{k \in K_{all}}^{N_{K_{all}}} \sum\limits_{j \in P}^{W-N_{Pk}'} DP_k(j) \Big/ \sum\limits_{k \in K_{all}}^{N_{K_{all}}}(W - N_{Pk}') - \sum\limits_{m \in K}^{N_K} \sum\limits_{i \in P}^{N_{Pm}} DP_m(i) \cdot \left(1 - \frac{N_{Pm}-1}{pg}\right) \cdot \frac{1}{pg}} \times \frac{SF}{pg}$$

$$\cdots (7)$$

By calculating this SIR for all midamble codes used by the own user and averaging the SIR, that is, from the following formula (8):

$$SIR = \sum\limits_{k \in K_{own}}^{N_{K_{own}}} SIR_k / N_{K_{own}} \quad \cdots (8)$$

the SIR of the default midamble is calculated. Here, $N_{kown}$ is the number of midamble shifts used by the own user, $K_{own}$ is a set of midamble shifts used by the own user. Formula (7) and formula (8) become general formulas for SIR measurement according to this method (formulas after the above described various corrections as in the case of a common midamble).

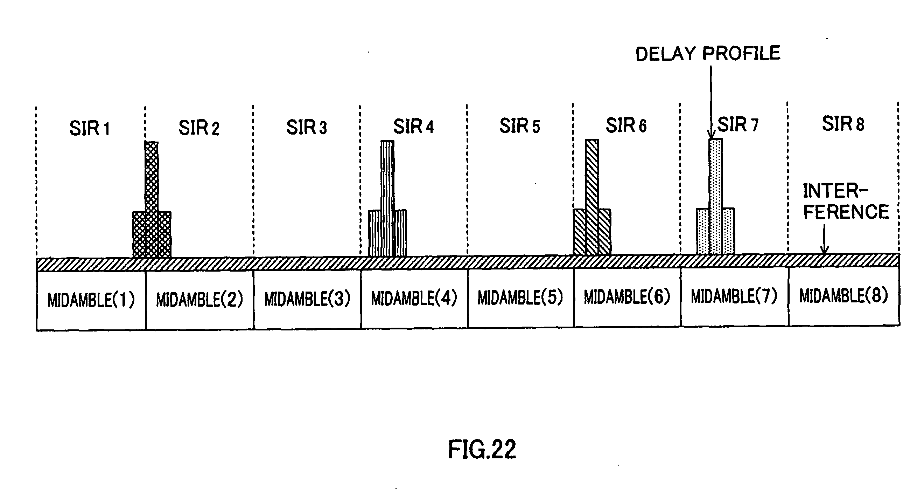

For example, in the example of the default midamble time slot shown in FIG. 4, an example of a more specific delay profile according to this method is shown in FIG. 22. Here, suppose the own user uses a midamble (2) and midamble (4). In this case, SIRs are calculated using midamble (2) and midamble (4). In that case, when a plurality of codes is multiplexed by one midamble, signal power must be divided by the number of codes to obtain an average of signal power per one code. After respective $SIR_k S$ are calculated, these are averaged.

b) Method of calculating signal power for each midamble and averaging the signal power

According to this method, the signal component of the numerator becomes an average of signal power for each midamble code used by the own user. Furthermore, interference power of the denominator is obtained by subtracting corrected signal power components of all users from the average of interference power for each midamble code used by the own user.

That is, the general formula of SIR measurement according to this method (formula after the above described various corrections as in the case of common midamble) can be expressed by the following formula (9) :

$$SIR = \cfrac{\displaystyle\sum_{k \in K_{own}}^{N_{K_{own}}} \sum_{i \in P}^{N_{Pk}} DP_k(i) \cdot \left(1 - \frac{N_{Pk} - 1}{pg}\right) \Big/ N_{code,k}}{\displaystyle\sum_{k \in K_{all}}^{N_{K_{all}}} \sum_{j \in P}^{W - N_{Pk}'} DP_k(j) \Big/ \sum_{k \in K_{all}}^{N_{K_{all}}} (W - N_{Pk}') - \sum_{k \in K}^{N_K} \sum_{i \in P}^{N_{Pm}} DP_m(i) \cdot \left(1 - \frac{N_{Pm} - 1}{pg}\right) \cdot \frac{1}{pg}} \times \frac{SF}{pg} \quad \cdots (9)$$

where $N_{kown}$ is the number of midamble shifts used by the own user, $K_{own}$ is a set of midamble shifts used by the own user, $N_{kall}$ is the number of midamble shifts, $K_{all}$ is a set of midamble shifts, $N_{pk}$ is the number of paths of midamble k, $N_{pk}'$ is the number of paths in a range assumed to be the same path in midamble k, $N_{code,k}$ is the number of spreading codes assigned to midamble k, W is the length of a delay profile, $DP_k(i)$ is electric power of the ith chip of the delay profile of midamble k, $DP_k(j)$ is electric power of the jth chip of the delay profile of midamble k, P is a set of real paths, SF is a spreading factor, pg is the number of chips of the midamble section.

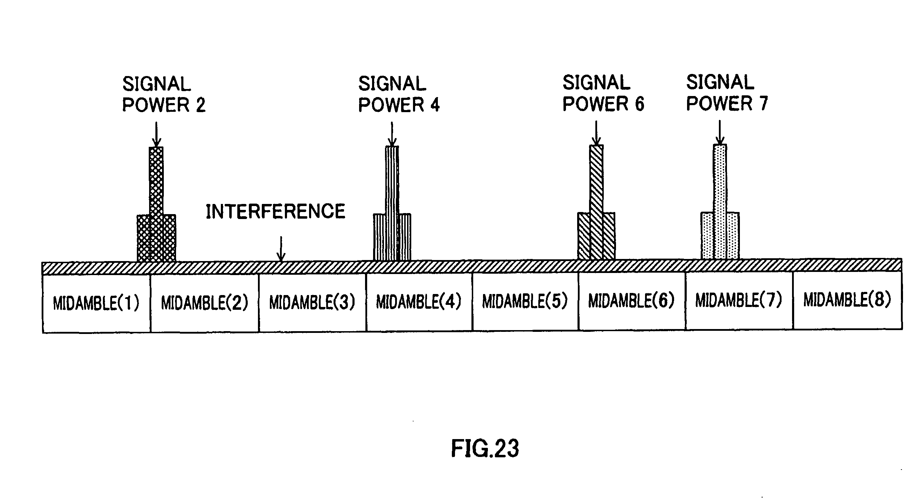

FIG.23 illustrates an example of a more specific delay profile according to this method. Here, suppose signal power is the sum of signal power of midamble (2) and midamble (4). Suppose the interference power is the sum of interference power of all midambles. Correction is performed by calculating interference components among paths from signal power of midamble (2), midamble (4), midamble (6) and midamble (7) and subtracting the interference components from the above described sum of interference power. Then, an SIR is calculated by calculating the ratio of the signal power calculated here to the interference power.

SIR measurement using UE specific midamble

In the case of a UE specific midamble, one user uses one midamble. Furthermore, since JD is performed using only the own user's code, interference cancellation for other users is not performed and correction of interference power by other users' signal power is not necessary. Therefore, a general formula of SIR measurement (formula after the above described various corrections as in the case of a common midamble) can be expressed by the following formula (10):

$$SIR = \cfrac{\displaystyle\sum_{i \in P}^{N_P} DP(i) \cdot \left(1 - \frac{N_P - 1}{pg}\right) \Big/ N_{code}}{\displaystyle\sum_{k \in K_{all}}^{N_{K_{all}}} \sum_{j \in P}^{W - N_P'} DP(j) \Big/ \sum_{k \in K_{all}}^{N_{K_{all}}} (W - N_P') - \sum_{i \in P}^{N_P} DP(i) \cdot \left(1 - \frac{N_P - 1}{pg}\right) \cdot \frac{1}{pg}} \times \frac{SF}{pg} \quad \cdots (10)$$

where Np is the number of paths, Np' is the number of paths in a range assumed to be the same path, $N_{code}$ is the number of assigned spreading codes, W is the length of a delay profile, DP(i) is electric power of the ith chip of a delay profile, DP(j) is electric power of the jth chip of the delay profile, P is a set of real paths, SF is a spreading factor, pg is the number of chips of a midamble section, $N_{Kall}$ is the number of midamble shifts and $K_{all}$ is a set of midamble shifts.

For example, as shown in the example of the time slot of the UE specific midamble in FIG. 5, in this case, a plurality of midambles are multiplexed and each user uses one midamble and data sections are multiplexed using a plurality of codes.

As shown above, according to this embodiment, an SIR is measured from a delay profile, the positions of the selected paths and reception power after RAKE combining, and therefore the SIR can be measured without waiting until the JD demodulation processing is completed, that is, the SIR can be measured immediately after a downlink time slot is received and a transmit power control bit can be calculated in time for the next uplink time slot. Moreover, a delay profile is created using a midamble section in that case, it is possible to increase a processing gain compared to the conventional SIR measuring method using data sections, measure the SIR with a high degree of accuracy and distinguish signal components from interference components according to the positions of the selected paths and thereby measure the SIR after interference cancellation. That is, it is possible to measure the SIR after interference cancellation in a short time after the reception without performing JD demodulation.

As a modification example of this embodiment, the method of measuring the SIR may be changed for each allocation mode. More specifically, a calculation formula (e.g., above described formula (6) to formula (10)) corresponding to each allocation mode (common midamble, default midamble and UE specific midamble) is stored beforehand, a calculation formula corresponding to the specified allocation mode is selected for each slot and an SIR is calculated using the selected calculation formula. This allows even one apparatus to measure an SIR even if its allocation mode is different.

(Embodiment 2)

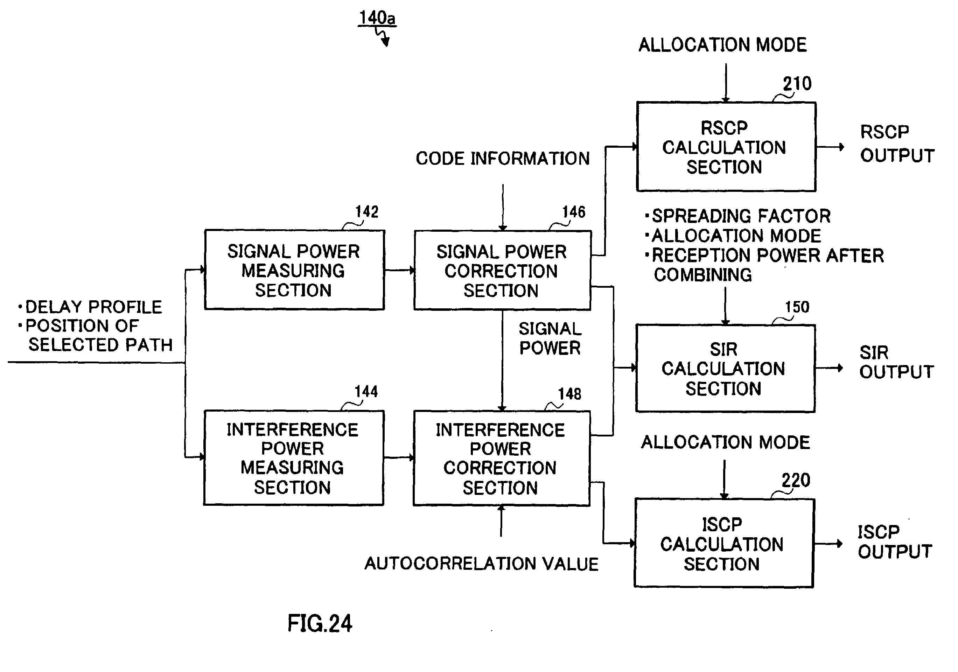

FIG.24 is a block diagram showing a configuration of an SIR measuring section of an SIR measuring apparatus according to Embodiment 2 of the present invention. This SIR measuring apparatus (and SIR measuring section) has a basic configuration similar to that of the SIR measuring apparatus (and SIR measuring section) corresponding to Embodiment 1 shown in FIG. 1 and FIG.2, and therefore the same components are assigned the same reference numerals and explanations thereof will be omitted.

A feature of this embodiment is to calculate received signal code power (RSCP) and interference signal code power (ISCP) simultaneously using parameters obtained when an SIR is measured. For this purpose, an SIR measuring section 140a further comprises an RSCP calculation section 210 and an ISCP calculation section 220. As shown above, the RSCP of P-CCPCH is a measuring item of the 3GPP TDD and the time slot ISCP is also a measuring item of the 3GPP TDD.

The RSCP calculation section 210 measures the RSCP from the signal power component of the measured SIR. More specifically, the RSCP is calculated according to an allocation mode, that is, for a common midamble, default midamble, UE specific midamble by the following formula (11) , formula (12) and formula (13):

$$RSCP = \sum_{i \in P}^{N_p} DP(i) \cdot \left(1 - \frac{N_P - 1}{pg}\right) \times \frac{P_{RAKE\_own}}{P_{RAKE\_total}} \times \frac{1}{pg} \quad \cdots (11)$$

$$RSCP = \sum_{k \in K_{own}}^{N_{K_{own}}} \sum_{i \in P}^{N_{Pk}} DP_k(i) \cdot \left(1 - \frac{N_{Pk} - 1}{pg}\right) \Big/ N_{code,k} \cdot \frac{1}{pg} \quad \cdots (12)$$

$$RSCP = \sum_{i \in P}^{N_P} DP(i) \cdot \left(1 - \frac{N_P - 1}{pg}\right) \Big/ N_{code} \cdot \frac{1}{pg} \quad \cdots (13)$$

The ISCP calculation section 220 measures the ISCP from the interference power component of the measured SIR. More specifically, the ISCP is calculated according to an allocation mode, that is, for a common midamble, default midamble and UE specific midamble by the following formula (14), formula (15) and formula (16):

$$ISCP = \sum_{k \in K_{all}}^{N_{K_{all}}} \sum_{j \in \overline{P}}^{W-N_P'} DP(j) \Bigg/ \sum_{k \in K_{all}}^{N_{K_{all}}}(W - N_P') - \sum_{i \in P}^{N_p} DP(i) \cdot \left(1 - \frac{N_P - 1}{pg}\right) \cdot \frac{1}{pg} \quad \cdots (14)$$

$$ISCP = \sum_{k \in K_{all}}^{N_{K_{all}}} \sum_{j \in \overline{P}}^{W-N_{Pk}'} DP_k(j) \Bigg/ \sum_{k \in K_{all}}^{N_{K_{all}}}(W - N_{Pk}') - \sum_{m \in K}^{N_k} \sum_{i \in P}^{N_{Pm}} DP_m(i) \cdot \left(1 - \frac{N_{Pm} - 1}{pg}\right) \cdot \frac{1}{pg} \quad \cdots (15)$$

$$ISCP = \sum_{k \in K_{all}}^{N_{K_{all}}} \sum_{j \in P}^{W-N_P'} DP(j) \Bigg/ \sum_{k \in K_{all}}^{N_{K_{all}}}(W - N_P') - \sum_{i \in P}^{N_P} DP(i) \cdot \left(1 - \frac{N_P - 1}{pg}\right) \cdot \frac{1}{pg} \quad \cdots (16)$$

Thus, this embodiment allows the RSCP and ISCP to be measured from the delay profile and the positions of the selected paths simultaneously with measurement of an SIR.

According to this embodiment, the RSCP and ISCP are measured simultaneously with the measurement of the SIR, but the present invention is not limited to this. It is possible, for example, to measure only one of the RSCP or ISCP. Furthermore, it is also possible to measure either one or both of the RSCP and ISCP independently of the measurement of the SIR instead of measuring them simultaneously with SIR measurement.

The SIR measuring apparatus according to the above described embodiments can be mounted in a mobile station apparatus and/or base station apparatus.

As described above, the present invention can measure an SIR after interference cancellation with a high degree of accuracy in a short time after the reception without performing JD demodulation.

That is, the SIR measuring apparatus of the present invention comprises a creation section which creates a delay profile using known signals included in a received signal, a selection section which selects real paths using the created delay profile, a RAKE combining section which RAKE-combines the received signal and a measuring section which measures an SIR after interference cancellation using the created delay profile, the positions of the selected paths and the reception power after RAKE combining.

According to this configuration, the SIR is measured from the delay profile, the positions of the selected paths and reception power after RAKE combining, and therefore it is possible to measure the SIR, for example, without waiting until the JD demodulation processing is completed, that is, measure the SIR immediately after the downlink time slot is received and calculate a transmit power control bit in time for the next uplink time slot. Moreover, it is also possible to distinguish signal components from interference components according to the positions of the selected paths and thereby measure the SIR after interference cancellation. That is, it is possible to measure the SIR after interference cancellation in a short time after its reception without performing JD demodulation.

In the above configuration, when the known signals are midamble sections of the respective slots, a delay profile is created using the midamble sections and therefore a large processing gain is obtained compared to a conventional SIR measuring method using data sections and it is possible to measure the SIR with a high degree of accuracy.

Furthermore, when the measuring section comprises a signal power measuring section which measures signal power using the created delay profile and the positions of the selected paths, an interference power measuring section which measures interference power using the created delay profile and the positions of the selected paths and a calculation section which calculates an SIR using the measured signal power, interference power and reception power after RAKE combining according to a predetermined calculation formula, signal power and interference power are measured from the delay profile and the positions of the selected paths and the SIR is measured from each measurement result and reception power after RAKE combining, and therefore it is possible to measure the SIR after interference cancellation in a short time after its reception without performing JD demodulation.

Furthermore, when the measuring section further comprises a signal power correction section which corrects measured signal power in such a way as to remove influences of interference among the selected paths and the calculation section calculates the SIR using the signal power corrected by the signal power correction section instead of the measured signal power, signal power is corrected so as to remove influences of interference among the selected paths (included in signal power of each path), and therefore it is possible to improve the accuracy of measurement of signal power and increase the accuracy of measurement of SIR.

Furthermore, when the measuring section further comprises a first interference power correction section which corrects measured interference power so as to remove influences of autocorrelation components and the calculation section calculates an SIR using the interference power corrected by the first interference power correction section instead of the measured interference power, interference power is corrected so as to remove influences of autocorrelation components (interference power includes power generated by autocorrelation of the signal components), and therefore it is possible to improve the accuracy of measurement of interference power and further improve the accuracy of measurement of the SIR.

Furthermore, when the measuring section further comprises a second interference power correction section which corrects the measured interference power so as to remove influences of the reception filter and the calculation section calculates an SIR using the interference power corrected by the second interference power correction section instead of the measured interference power, interference power is corrected so as to remove influences (interference power includes signal power because the signal of each path is distorted by the roll off filter) of the reception filter (e. g., roll off filter), and therefore it is possible to improve the accuracy of measurement of interference power and further improve the accuracy of measurement of the SIR.

Furthermore, when the known signals are midamble sections of the respective slots, the creation section creates a delay profile of midamble shifts used by the own user and a delay profile of midamble shifts not used by the own user, the second measuring section measures interference power using the delay profile of the midamble shifts used by the own user and the delay profile of the midamble shifts not used by the own user, interference power is measured using not only the delay profile of the midamble shifts used by the own user but also the delay profile of the midamble shifts not used by the own user, and therefore the range of measuring interference power is expanded and it is possible to improve the accuracy of measurement of interference power in the case of a propagation path with a dynamic characteristic, too and improve the accuracy of measurement of the SIR.

Furthermore, when the known signals are midamble sections of the respective slots, if the calculation formula used by the calculation section is applicable to each allocation mode, the calculation formula is applicable to each allocation mode, or more specifically, common midamble, default midamble and UE specific midamble, and therefore it is possible to measure the SIR after interference cancellation with a high degree of accuracy in a short time after its reception without performing JD demodulation in each allocation mode.

Furthermore, when the known signals are midamble sections of the respective slots, if the calculation section comprises a section which stores a calculation formula corresponding to each allocation mode and a section which selects a calculation formula corresponding to the specified allocation mode and calculates an SIR according to the selected calculation formula, the calculation formula corresponding to each allocation mode is stored beforehand, the SIR is calculated according to the calculation formula corresponding to the specified allocation mode, that is, the SIR measuring method is changed for each allocation mode, and therefore it is possible to measure the SIR using one apparatus even if the allocation mode is different.

Furthermore, when the measuring section further comprises an RSCP measuring section which measures received signal code power using the signal power measured by the signal power measuring section, received signal code power (RSCP) is measured using the measured signal power, it is possible to measure the RSCP of P-CCPCH (Primary-Common Control Physical Channel) which is, for example, a measuring item of the 3GPP TDD from the delay profile and the positions of the selected paths simultaneously with the measurement of the SIR.

Furthermore, when the measuring section further comprises an ISCP measuring section which measures interference signal code power using the interference power measured by the interference power measuring section, interference signal code power (ISCP) (called "time slot ISCP" by the 3GPP TDD) is measured using the measured interference power, and therefore it is possible to measure time slot ISCP which is a measuring item of the 3GPP TDD simultaneously with the measurement of the SIR from the delay prof ile and the positions of the selected paths.

Furthermore, the SIR measuring method of the present invention comprises a creating step of creating a delay profile using known signals included in a received signal, a selecting step of selecting real paths using the created delay profile, a RAKE combining step of RAKE-combining the received signal and a measuring step of measuring an SIR after interference cancellation using the created delay profile, the positions of the selected paths and reception power after RAKE combining.

According to this method, the SIR is measured from the delay profile, the positions of the selected paths and reception power after RAKE combining, and therefore it is possible to measure the SIR, for example, without waiting until the JD demodulation processing is completed, that is, measure the SIR immediately after a downlink time slot is received and calculate a transmit power control bit in time for the next uplink time slot. Moreover, it is also possible to distinguish signal components from interference components according to the positions of the selected paths and thereby measure the SIR after interference cancellation. That is, it is possible to measure the SIR after interference cancellation in a short time after its reception without performing JD demodulation.

In the above described method, when the measuring method is changed for each allocation mode, the measuring method is changed for each allocation mode, and therefore even if the allocation mode is different, it is possible to measure the SIR using one apparatus.

Furthermore, when the allocation mode is a common midamble, if the SIR after interference cancellation is measured by the above formula (2), it is possible to measure the SIR after interference cancellation with a high degree of accuracy in a short time after its reception without performing JD demodulation.

Furthermore, in the above described method (when the allocation mode is a common midamble) , if signal power is further corrected to remove influences of interference among paths and the SIR after the correction of the signal power is measured by the above described formula (3), signal power is corrected in such a way as to remove influences of interference among the selected paths, and therefore it is possible to improve the accuracy of measurement of signal power and increase the accuracy of measurement of the SIR.

Furthermore, in the above described method (when the allocation mode is a common midamble), when interference power is further corrected to remove influences of autocorrelation components and the SIR after the correction of the interference power is measured by the above formula (4), interference power is corrected so as to remove influences of autocorrelation components, and therefore it is possible to improve the accuracy of measurement of interference power and increase the accuracy of measurement of the SIR.

Furthermore, in the above method (when the allocation mode is a common midamble) , when interference power is further corrected to remove influences of a reception filter and an SIR after the correction of the interference power is measured according to the above formula (5), the interference power is corrected so as to remove influences of the reception filter (e.g., a roll off filter) , and therefore it is possible to improve the accuracy of measurement of interference power and further increase the accuracy of measurement of the SIR.

Furthermore, in the above method (when the allocation mode is a common midamble), when interference power is measured using midamble shifts used by the own user and midamble shifts not used by the own user and the SIR after interference cancellation is measured by the above formula (6), interference power is measured using not only the delay profile of the midamble shifts used by the own user but also the delay profile of the midamble shifts not used by the own user, and therefore the range of measuring interference power is expanded and it is possible to improve the accuracy of measurement of interference power in the case of a propagation path with a dynamic characteristic, too and improve the accuracy of measurement of the SIR.

Furthermore, when the allocation mode is a default midamble, if an SIR is calculated for each midamble and the obtained calculation result is averaged to measure the SIR after interference cancellation according to the above formula (7) and formula (8), it is possible to measure the SIR after interference cancellation with a high degree of accuracy in a short time after its reception without performing JD demodulation.

Furthermore, when the allocation mode is a default midamble, if signal power and interference power are calculated for each midamble and the respective calculation results are averaged to measure an SIR after interference cancellation according to the above formula (9), it is possible to measure the SIR after interference cancellation with a high degree of accuracy in a short time after its reception without performing JD demodulation in the case where the allocation mode is a default midamble.

Furthermore, when the allocation mode is a UE specific midamble, if an SIR after interference cancellation is measured according to the above formula (10) , it is possible to measure the SIR after interference cancellation with a high degree of accuracy in a short time after its reception without performing JD demodulation.

This application is based on the Japanese Patent Application No. 2002-117081 filed on April 19, 2002, entire content of which is expressly incorporated by reference herein.

Industrial Applicability

The present invention is applicable to a mobile station apparatus or base station apparatus, etc., in a mobile communication system.

**Claims**

**1.** An SIR measuring apparatus comprising:

a creation section that creates a delayprofile using known signals included in a received signal;

a selection section that selects real paths using the created delay profile;

a RAKE combining section that RAKE-combines the received signal; and

a measuring section that measures an SIR after interference cancellation using the created delay profile, the positions of the selected paths and the reception power after RAKE combining.

2. The SIR measuring apparatus according to claim 1, wherein said known signals are midamble sections of respective slots.

3. The SIR measuring apparatus according to claim 1, wherein said measuring section comprises:

a signal power measuring section that measures signal power using the created delay profile and the positions of the selected paths;

an interference power measuring section that measures interference power using the created delay profile and the positions of the selected paths; and

a calculation section that calculates an SIR using measured signal power, interference power and reception power after RAKE combining according to a predetermined calculation formula.

4. The SIR measuring apparatus according to claim 3, wherein said measuring section further comprises a signal power correction section that corrects measured signal power so as to remove influences of interference among the selected paths, and said calculation section calculates an SIR using signal power corrected by said signal power correction section instead of the measured signal power.

5. The SIR measuring apparatus according to claim 3, wherein said measuring section further comprises a first interference power correction section that corrects measured interference power so as to remove influences of autocorrelation components, said calculation section calculates an SIR using the interference power corrected by said first interference power correction section instead of the measured interference power.

6. The SIR measuring apparatus according to claim 3, wherein said measuring section further comprises a second interference power correction section that corrects the measured interference power so as to remove influences of a reception filter, and said calculation section calculates an SIR using interference power corrected by said second interference power correction section instead of the measured interference power.

7. The SIR measuring apparatus according to claim 3, wherein when said known signals are midamble sections of the respective slots, said creation section creates a delay profile of midamble shifts used by the own user and a delay profile of midamble shifts not used by the own user, and said second measuring section measures interference power using the delay profile of the midamble shifts used by the own user and the delay profile of the midamble shifts not used by the own user.

8. The SIR measuring apparatus according to claim 3, wherein when said known signals are midamble sections of the respective slots, the calculation formula used by said calculation section is applicable to each allocation mode.

9. The SIR measuring apparatus according to claim 3, wherein when said known signals are midamble sections of the respective slots, said calculation section comprises a section that stores a calculation formula corresponding to each allocation mode and a section that selects a calculation formula corresponding to the specified allocation mode, and calculates an SIR according to the selected calculation formula.

10. The SIR measuring apparatus according to claim 3, wherein said measuring section further comprises an RSCP measuring section that measures received signal code power using the signal power measured by said signal power measuring section.

11. The SIR measuring apparatus according to claim 3, wherein said measuring section further comprises an ISCP measuring section that measures interference signal code power using the interference power measured by said interference power measuring section.

**12.** A mobile station apparatus comprising the SIR measuring apparatus according to claim 1.

**13.** A base station apparatus comprising the SIR measuring apparatus according to claim 1.

**14.** An SIR measuring method comprising:

a creating step of creating a delay profile using known signals included in a received signal;
a selecting step of selecting real paths using the created delay profile;
a RAKE combining step of RAKE-combining the received signal; and
a measuring step of measuring an SIR after interference cancellation using the created delay profile, the positions of the selected paths and the reception power after RAKE combining.

**15.** The SIR measuring method according to claim 14, wherein the measuring method is changed for each allocation mode.

**16.** An SIR measuring method for, when the allocation mode is a common midamble, measuring an SIR after interference cancellation according to the following formula:

$$SIR = \frac{\sum_{i \in P}^{Np} DP(i)}{\sum_{j \in \bar{P}}^{W-N_P} DP(j) \big/ (W - N_P)} \times \frac{P_{RAKE\_own}}{P_{RAKE\_total}} \times \frac{SF}{pg} \quad \cdots (2)$$

where

| | |
|---|---|
| $N_p$: | The number of paths |
| W: | Delay profile length |
| DP(i): | Electric power of ith chip of delay profile |
| DP(j): | Electric power of jth chip of delay profile |
| P: | Set of real paths |
| $P_{RAKE\_own}$: | Electric power after RAKE combining by spreading code of own user |
| $P_{RAKE\_total}$: | Total power corresponding to all spreading codes of electric power after RAKE combining by spreading codes |
| SF: | Spreading factor |
| pg: | The number of chips in midamble section |

**17.** The SIR measuring method according to claim 16, wherein signal power is corrected to remove influences of interference among paths and the SIR after correction of the signal power is measured according to the following formula:

$$SIR = \frac{\sum_{i \in P}^{Np} DP(i) \cdot \left(1 - \frac{N_P - 1}{pg}\right)}{\sum_{j \in \bar{P}}^{W-N_P} DP(j) \big/ (W - N_P)} \times \frac{P_{RAKE\_own}}{P_{RAKE\_total}} \times \frac{SF}{pg} \quad \cdots (3)$$

**18.** The SIR measuring method according to claim 17, wherein interference power is corrected to remove influences of autocorrelation components and the SIR after correction of the interference power is measured according to the following formula:

$$SIR = \frac{\sum_{i \in P}^{Np} DP(i) \cdot \left(1 - \frac{N_P - 1}{pg}\right)}{\sum_{j \in \overline{P}}^{W-N_P} DP(j) \Big/ (W - N_P) - \sum_{i \in P}^{Np} DP(i) \cdot \left(1 - \frac{N_P - 1}{pg}\right) \cdot \frac{1}{pg}} \times \frac{P_{RAKE\_own}}{P_{RAKE\_total}} \times \frac{SF}{pg} \quad \cdots (4)$$

**19.** The SIR measuring method according to claim 18, wherein interference power is corrected to remove influences of a reception filter and the SIR after correction of the interference power is measured according to the following formula:

$$SIR = \frac{\sum_{i \in P}^{Np} DP(i) \cdot \left(1 - \frac{N_P - 1}{pg}\right)}{\sum_{j \in \overline{P}}^{W-N_P'} DP(j) \Big/ (W - N_P') - \sum_{i \in P}^{Np} DP(i) \cdot \left(1 - \frac{N_P - 1}{pg}\right) \cdot \frac{1}{pg}} \times \frac{P_{RAKE\_own}}{P_{RAKE\_total}} \times \frac{SF}{pg} \quad \cdots (5)$$

where

$N_p'$ : The number of paths in a range assumed to be the same path

**20.** The SIR measuring method according to claim 19, wherein interference power is measured using midamble shifts used by the own user and midamble shifts not used by the own user and the SIR after interference cancellation is measured according to the following formula:

$$SIR = \frac{\sum_{i \in P}^{Np} DP(i) \cdot \left(1 - \frac{N_P - 1}{pg}\right)}{\sum_{k \in K_{all}}^{N_{Kall}} \sum_{j \in \overline{P}}^{W-N_{Pk}'} DP_k(j) \Big/ \sum_{k \in K_{all}}^{N_{Kall}} (W - N_{Pk}') - \sum_{i \in P}^{Np} DP(i) \cdot \left(1 - \frac{N_P - 1}{pg}\right) \cdot \frac{1}{pg}} \times \frac{P_{RAKE\_own}}{P_{RAKE\_total}} \times \frac{SF}{pg} \quad \cdots (6)$$

where

$N_{kall}$ : The number of midamble shifts
$K_{all}$ : A set of midamble shifts
$N_{pk}'$ : The number of paths in a range assumed to be the same path in midamble k
$DP_k(j)$ : Electric power of jth chip of delay profile of midamble k

**21.** An SIR measuring method for, when the allocation mode is a default midamble, calculating an SIR for each midamble and averaging the obtained calculation result to measure the SIR after interference cancellation according to the following formulas:

$$SIR_k = \frac{\sum\limits_{i \in P}^{N_{Pk}} DP_k(i) \cdot \left(1 - \frac{N_{Pk}-1}{pg}\right) \Big/ N_{code,k}}{\sum\limits_{k \in K_{all}}^{N_{K_{all}}} \sum\limits_{j \in P}^{W-N_{Pk}'} DP_k(j) \Big/ \sum\limits_{k \in K_{all}}^{N_{K_{all}}} (W - N_{Pk}') - \sum\limits_{m \in K}^{N_K} \sum\limits_{i \in P}^{N_{Pm}} DP_m(i) \cdot \left(1 - \frac{N_{Pm}-1}{pg}\right) \cdot \frac{1}{pg}} \times \frac{SF}{pg}$$

$$\cdots (7)$$

$$SIR = \sum\limits_{k \in K_{own}}^{N_{K_{own}}} SIR_k / N_{K_{own}} \quad \cdots (8)$$

where

$SIR_k$:     SIR of midamble k
$N_K$:     Total number of multiplexed midamble shifts
K:     A set of total multiplexed midamble shifts
$N_{pk}$:     The number of paths of midamble k
$N_{pk}'$:     The number of paths in midamble k in a range assumed to be the same path
$N_{code,k}$:     The number of spreading codes assigned to midamble k
W:     Delay profile length
$DP_k(i)$:     Electric power of ith chip of delay profile in midamble k
$DP_k(j)$:     Electric power of jth chip of delay profile in midamble k
P:     A set of real paths
SF:     Spreading factor
pg:     The number of chips of midamble section
$N_{kall}$:     The number of midamble shifts
$K_{all}$:     A set of midamble shifts
$N_{Kown}$:     The number of midamble shifts used by own user
$K_{own}$:     A set of midamble shifts used by own user

**22.** An SIR measuring method for, when the allocation mode is a default midamble, calculating signal power and interference power for each midamble and averaging the respective calculation results to measure an SIR after interference cancellation according to the following formula:

$$SIR = \frac{\sum\limits_{k \in K_{own}}^{N_{K_{own}}} \sum\limits_{i \in P}^{N_{Pk}} DP_k(i) \cdot \left(1 - \frac{N_{Pk}-1}{pg}\right) \Big/ N_{code,k}}{\sum\limits_{k \in K_{all}}^{N_{K_{all}}} \sum\limits_{j \in P}^{W-N_{Pk}'} DP_k(j) \Big/ \sum\limits_{k \in K_{all}}^{N_{K_{all}}} (W - N_{Pk}') - \sum\limits_{k \in K}^{N_K} \sum\limits_{i \in P}^{N_{Pm}} DP_m(i) \cdot \left(1 - \frac{N_{Pm}-1}{pg}\right) \cdot \frac{1}{pg}} \times \frac{SF}{pg} \quad \cdots (9)$$

where

$N_{Kown}$:     The number of midamble shifts used by own user
$K_{own}$:     A set of midamble shifts used by own user
$N_{Kall}$:     The number of midamble shifts
$K_{all}$:     A set of midamble shifts
$N_{pk}$:     The number of paths of midamble k
$N_{pk}'$:     The number of paths in midamble k in a range assumed to be the same path
$N_{code,k}$:     The number of spreading codes assigned to midamble k
W:     Delay profile length
$DP_k(i)$:     Electric power of ith chip of delay profile of midamble k

DP$_k$(j):  Electric power of jth chip of delay profile of midamble k
P:  A set of real paths
SF:  Spreading factor
pg:  The number of chips of midamble section

**23.** An SIR measuring method for, when the allocation mode is a UE specific midamble, measuring an SIR after interference cancellation according to the following formula:

$$SIR = \frac{\sum\limits_{i \in P}^{N_P} DP(i) \cdot \left(1 - \frac{N_P - 1}{pg}\right) \Big/ N_{code}}{\sum\limits_{k \in K_{all}}^{N_{K_{all}}} \sum\limits_{j \in \overline{P}}^{W - N_P'} DP(j) \Big/ \sum\limits_{k \in K_{all}}^{N_{K_{all}}} (W - N_P') - \sum\limits_{i \in P}^{N_P} DP(i) \cdot \left(1 - \frac{N_P - 1}{pg}\right) \cdot \frac{1}{pg}} \times \frac{SF}{pg} \quad \cdots (10)$$

where

N$_p$:  The number of paths
N$_p$':  The number of paths in a range assumed to be the same path
N$_{code}$:  The number of assigned spreading codes
W:  Delay profile length
DP(i):  Electric power of ith chip of delay profile
DP(j):  Electric power of jth chip of delay profile
P:  A set of real paths
SF:  Spreading factor
pg:  The number of chips of midamble section
N$_{Kall}$:  The number of midamble shifts
K$_{all}$:  A set of midamble shifts

**100**

**·SPREADING FACTOR**
**·ALLOCATION MODE**

**140**

DELAY PROFILE

SIR MEASURING SECTION → TO TRANSMIT POWER CONTROL BIT CALCULATION SECTION

POSITION OF SELECTED PATH

RECEPTION POWER AFTER RAKE COMBINING

CODE INFORMATION

**110**

**130**

**120**

RADIO RECEPTION SECTION

RAKE COMBINING SECTION **134**

**131**

CORRELATION PROCESSING SECTION

**132**

DELAY PROFILE CREATION SECTION

**133**

PATH SELECTION SECTION

**135**

JD CALCULATION SECTION → TO DECODING SECTION

FIG.1

CODE INFORMATION

·SPREADING FACTOR
·ALLOCATION MODE
·RECEPTION POWER AFTER
 RAKE COMBINING

142

SIGNAL POWER
MEASURING
SECTION

146

SIGNAL POWER
CORRECTION
SECTION

·DELAY PROFILE
·POSITION OF
 SELECTED PATH

SIGNAL
POWER

150

SIR CALCULATION
SECTION

SIR
OUTPUT

144

INTERFERENCE
POWER
MEASURING
SECTION

148

INTERFERENCE
POWER
CORRECTION
SECTION

AUTOCORRELATION VALUE

FIG.2

EP 1 499 032 A1

TRANSMIT POWER

| SF | pg | SF |
|---|---|---|
| CODE c(2) | COMMON MIDAMBLE m(x) | CODE c(2) |
| CODE c(4) | | CODE c(4) |

P_RAKE_own

P_RAKE_total

1 SLOT

TIME

**FIG.3**

TRANSMIT POWER

| SF | pg | SF |
|---|---|---|
| CODE c(1) | MIDAMBLE m(2) | CODE c(1) |
| CODE c(2) | m(4) | CODE c(2) |
| CODE c(3) | MIDAMBLE m(6) | CODE c(3) |
| | MIDAMBLE m(7) | |

1 SLOT

TIME

**FIG.4**

TRANSMIT POWER

| SF | pg | SF |
|---|---|---|
| | MIDAMBLE m(1) | |
| CODE c(3) | MIDAMBLE m(2) | CODE c(3) |
| CODE c(4) | m(3) | CODE c(3) |
| | MIDAMBLE m(4) | |
| | m(5) | |

1 SLOT

TIME

**FIG.5**

FIG.6

| NUMBER OF USERS | 1 |
|---|---|
| NUMBER OF MULTIPLEXED CODES | 2 |
| NUMBER OF OVERSAMPLED TRANSMISSION PATHS | 4 |
| NUMBER OF OVERSAMPLED DELAY PROFILES | 2 |
| PATH SELECTION | SELF-RUNNING |
| TRANSMISSION PATH | STATIC CHARACTERISTIC |

FIG.7

FIG.8

FIG.9

FIG.10

FIG.11

FIG.12

| NUMBER OF CHIPS IN SAME PATH RANGE | 0 | 1 | 2 | 3 | 4 | 5 |
|---|---|---|---|---|---|---|
| POWER IN SAME PATH/TOTAL POWER | 0.4996 | 0.9457 | 0.9874 | 0.9983 | 0.9988 | 0.9994 |

FIG.13

FIG.14

FIG.15

FIG.16

FIG.17

|  | DELAY TIME [ns] | RELATIVE POWER [dB] |
|---|---|---|
| CASE 1 | [0, 2928] | [0, −10] |
| CASE 2 | [0, 2928, 12000] | [0, 0, 0] |
| CASE 3 | [0, 781, 1563, 2344] | [0, −3, −6, −9] |

FIG.18

FIG.19

FIG.20

EP 1 499 032 A1

DELAY PROFILE

INTERFERENCE

| MIDAMBLE(1) | MIDAMBLE(2) | MIDAMBLE(3) | MIDAMBLE(4) | MIDAMBLE(5) | MIDAMBLE(6) | MIDAMBLE(7) | MIDAMBLE(8) |

FIG.21

EP 1 499 032 A1

DELAY PROFILE

| SIR 1 | SIR 2 | SIR 3 | SIR 4 | SIR 5 | SIR 6 | SIR 7 | SIR 8 |

INTER-
FERENCE

| MIDAMBLE(1) | MIDAMBLE(2) | MIDAMBLE(3) | MIDAMBLE(4) | MIDAMBLE(5) | MIDAMBLE(6) | MIDAMBLE(7) | MIDAMBLE(8) |

FIG.22

SIGNAL
POWER 2

SIGNAL
POWER 4

SIGNAL
POWER 6

SIGNAL
POWER 7

INTERFERENCE

| MIDAMBLE(1) | MIDAMBLE(2) | MIDAMBLE(3) | MIDAMBLE(4) | MIDAMBLE(5) | MIDAMBLE(6) | MIDAMBLE(7) | MIDAMBLE(8) |

FIG.23

EP 1 499 032 A1

<u>140a</u>

ALLOCATION MODE

RSCP
CALCULATION
SECTION
210

RSCP
OUTPUT

CODE INFORMATION

·SPREADING FACTOR
·ALLOCATION MODE
·RECEPTION POWER AFTER
 COMBINING

142

SIGNAL POWER
MEASURING
SECTION

146

SIGNAL POWER
CORRECTION
SECTION

·DELAY PROFILE
·POSITION OF
 SELECTED PATH

SIGNAL
POWER

SIR
CALCULATION
SECTION
150

SIR
OUTPUT

144

INTERFERENCE
POWER
MEASURING
SECTION

148

INTERFERENCE
POWER
CORRECTION
SECTION

ALLOCATION MODE

ISCP
CALCULATION
SECTION
220

ISCP
OUTPUT

AUTOCORRELATION VALUE

FIG.24

## INTERNATIONAL SEARCH REPORT

| International application No. |
|---|
| PCT/JP03/05029 |

**A. CLASSIFICATION OF SUBJECT MATTER**
Int.Cl⁷ H04B1/707

According to International Patent Classification (IPC) or to both national classification and IPC

**B. FIELDS SEARCHED**

Minimum documentation searched (classification system followed by classification symbols)
Int.Cl⁷ H04B1/69-1/713, H04J13/00-13/06

Documentation searched other than minimum documentation to the extent that such documents are included in the fields searched
Jitsuyo Shinan Koho     1926-1996   Toroku Jitsuyo Shinan Koho   1994-2003
Kokai Jitsuyo Shinan Koho   1971-2003   Jitsuyo Shinan Toroku Koho   1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-285127 A (Matsushita Electric Industrial Co., Ltd.), 12 October, 2001 (12.10.01), Full text & WO 01/73966 A1 & AU 200142803 A & EP 1182796 A1 & JP 3308962 B2 & CN 1365545 A & US 2003/0012261 A1 | 1-3,10-14 |
| X | JP 2001-285209 A (Hitachi Kokusai Electric Inc.), 12 October, 2001 (12.10.01), Full text (Family: none) | 1-3,10-14 |

☒ Further documents are listed in the continuation of Box C.    ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 May, 2003 (21.05.03) | 03 June, 2003 (03.06.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| | International application No. |
| --- | --- |
| | PCT/JP03/05029 |

C (Continuation).  DOCUMENTS CONSIDERED TO BE RELEVANT

| Category* | Citation of document, with indication, where appropriate, of the relevant passages | Relevant to claim No. |
| --- | --- | --- |
| P,X | JP 2003-32168 A (Matsushita Electric Industrial Co., Ltd.), 31 January, 2003 (31.01.03), Full text (Family: none) | 1-3,10-14 |
| E,X | JP 2003-134060 A (Matsushita Electric Industrial Co., Ltd.), 09 May, 2003 (09.05.03), Full text (Family: none) | 1,12-14 |
| A | JP 2001-285180 A (Matsushita Electric Industrial Co., Ltd.), 12 October, 2001 (12.10.01), Full text & WO 01/76103 A1       & AU 200141062 A & BR 200105567 A      & EP 1182803 A1 & KR 2002015692 A     & US 2002/0160721 A1 & CN 1365551 A | 1-23 |

Form PCT/ISA/210 (continuation of second sheet) (July 1998)